# EUROPEAN PATENT APPLICATION

(11) **EP 3 403 908 A1**
(43) Date of publication of application: **21.11.2018**
(21) Application number: 17171700.2
(22) Date of filing: 18.05.2017
(51) Int. Cl.: B62K 5/007, B62K 5/08, B62K 21/08, B62K 21/10, B62K 21/20, B62K 25/00

(54) **SHOCK-ABSORBENT ANTI-TILT STRUCTURE OF ELECTRIC CARRIER**

(71) Applicant: KUIANDA Company Limited, Kaohsiung City 820 (TW)
(72) Inventor: CHEN, Mao-Chiang, 820 Kaohsiung City (TW)
(74) Representative: 2K Patentanwälte Blasberg Kewitz & Reichel

(57) **Abstract**

A shock-absorbent anti-tilt structure (100) of an electric carrier coordinates with a steering system (200), which includes a steering axis (210) and two sets of wheels (220). The shock-absorbent anti-tilt structure (100) of an electric carrier includes a frame (10) and an anti-tilt assembly (20). The frame (10) includes a wheel axle (11), a first extension section (12) pivotally connected to the wheel axle (11), a second extension section (13) pivotally connected to the first extension section (12), and a bushing (14) bridging the second extension section (13) and the steering axis (210). The anti-tilt assembly (20) includes two clamping members (21) connected to the wheel axle (11) and extending along the same direction as the first extension section (12), and two dampers (22) respectively clamped by the clamping members (21) and located closely to two sides of the first extension section (12). When the wheel axle (11) receives a force and becomes unleveled with the ground, each of the dampers (22) produces a reverse torque on the first extension section (12).

## Description

### FIELD OF THE INVENTION

The present invention relates to a shock-absorbent anti-tilt structure of an electric carrier, and particularly to a shock-absorbent anti-tilt structure of an electric carrier that achieves anti-tilt protection through an elastic element.

### BACKGROUND OF THE INVENTION

In many developed countries, the social structure has progressed towards aging in the recent years, and the elderly frequently suffer from impaired physical mobility due to biological factors such as function aging or diseases. To provide the elderly with better mobility, various electric scooters have become available. With the coordination of barrier-free spaces, not only the living quality of the elderly is increased, but also burdens on caretakers are alleviated. Further, electric scooters provide the physical challenged with similar assistance.

A structure of a conventional electric scooter includes a vehicle housing, a seat, a motor and wheels. To prevent discomfort caused by bumpy road conditions while progressing, and to reduce the risk of tilting over of the scooter, an anti-tilt structure is usually installed at a wheel of the scooter. Thus, the level of tilting of the seat is reduced and better comfort is provided while one rides the scooter. For example, the Taiwan Patent Utility Model Patent M341637 discloses an anti-tilt structure of a conventional electric scooter. In the above disclosure, a sector gear, which engages with multiple motor gear groups, is disposed at a lower part of a seat. Further, a mercury switch is applied as a sensor that senses an angle of vibration, and a tilt angle is corrected using an electrically-controlled technology to achieve the object of anti-tilting. However, the above approach requires a highly sensitive stepping motor to precisely provide the adjustment force for correcting the seat, hence leading to higher costs. Further, if the change rate of the tilt angle exceeds a range that the stepping motor is capable of handling, an accident of the scooter tilting over may still be incurred. Therefore, there is a need for a solution for solving the above issues.

### SUMMARY OF THE INVENTION

It is an object of the present invention to provide an enhanced shock-absorbent anti-tilt structure of an electric carrier, which is configured for overcoming the above drawbacks of the prior art, particularly for reducing overall weight and cost of the anti-tilt structure and also enhancing the sensitivity of elastic dampers provided in the shock-absorbent anti-tilt structure.

This problem is solved by a shock-absorbent anti-tilt structure of an electric carrier as claimed by claim 1. Further advantageous embodiments are the subject-matter of the dependent claims.

A shock-absorbent anti-tilt structure according to the present invention is configured to be coordinated with a steering system, which includes a steering axis and two sets of wheels linked with the steering axis. The shock-absorbent anti-tilt structure of an electric carrier includes a frame and an anti-tilt assembly. The frame according to the present invention comprises a wheel axle connected to the two sets of wheels, a first extension section pivotally connected to the wheel axle and extending towards a direction parallel with the ground, a second extension section pivotally connected to the first extension section, and a bushing bridging the second extension section and the steering axis. A gripper pattern is formed one side opposite a pivotal joint of the first extension section and the second extension section. The anti-tilt assembly includes two clamping members connected to the wheel axle and extending along the same direction as the first extension section, and two dampers respectively clamped by the clamping members and located closely to two sides of the first extension section. When the wheel axle receives a torque and becomes non-parallel to the ground, each of the dampers produces a reverse torque on the first extension section.

According to a further embodiment, an axis line of the steering axis corresponds to a middle part of wheel axle.

According to a further embodiment, the shock-absorbent anti-tilt structure of an electric carrier further includes a shock absorbent, which is disposed between the steering axis and the wheel axle and corresponding to the gripper pattern formed by the first extension section and the second extension section. When the second extension section receives a force and moves towards the wheel axle, the shock absorber produces a counteracting force on the second extension section.

According to a further embodiment, the shock absorber is made of polyurethane.

According to a further embodiment, an included angle between the steering axis and the wheel axle is between 75° and 88°.

According to a further embodiment, the dampers are made of polyurethane, and respectively press tightly against two sides of the first extension section.

### BRIEF DESCRIPTION OF THE DRAWINGS

Fig. 1 is a perspective diagram of an anti-tilt structure of an electric carrier of the present invention;
Fig. 2 is a side view according to a first embodiment of the present invention;
Fig. 3 is a schematic diagram of an operation according to the first embodiment of the present invention;
Fig. 4 is a planar view according to the first embodiment of the present invention; and
Fig. 5 is another schematic diagram of an operation according to the first embodiment of the present invention.

### DETAILED DESCRIPTION OF THE PREFERRED EMBODIMENTS

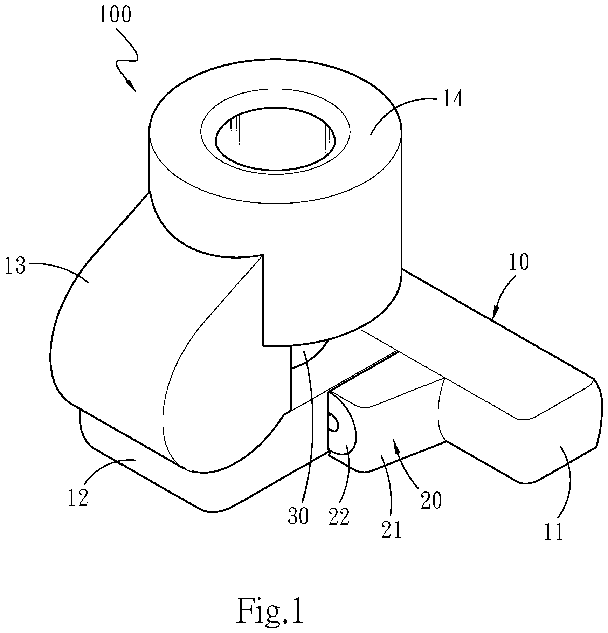

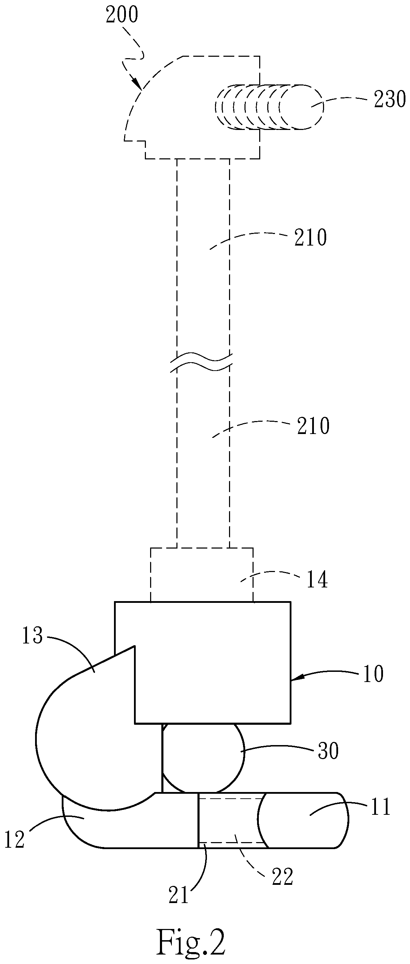

Referring to Fig. 1 and Fig. 2, the present invention provides a shock-absorbent anti-tilt structure 100 of an electric carrier. The shock-absorbent anti-tilt structure 100 coordinates with a steering system 200, which includes a steering axis 210 and two sets of wheels 220 linked with the steering axis 210. The shock-absorbent anti-tilt structure 100 of an electric carrier includes a frame 10 and an anti-tilt assembly 20. The steering system 200 is formed by components including a steering wheel 230, a steering arm (not shown) and a connecting bar (not shown). The steering axis 210 is a shaft linked with the steering wheel 230. Details of a steering system and a suspension system of a motorized vehicle are generally known to one person skilled in the art, and shall be omitted herein.

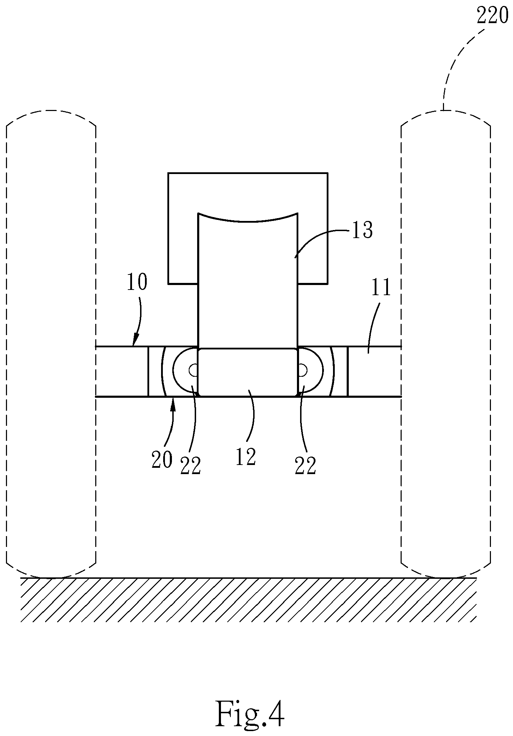

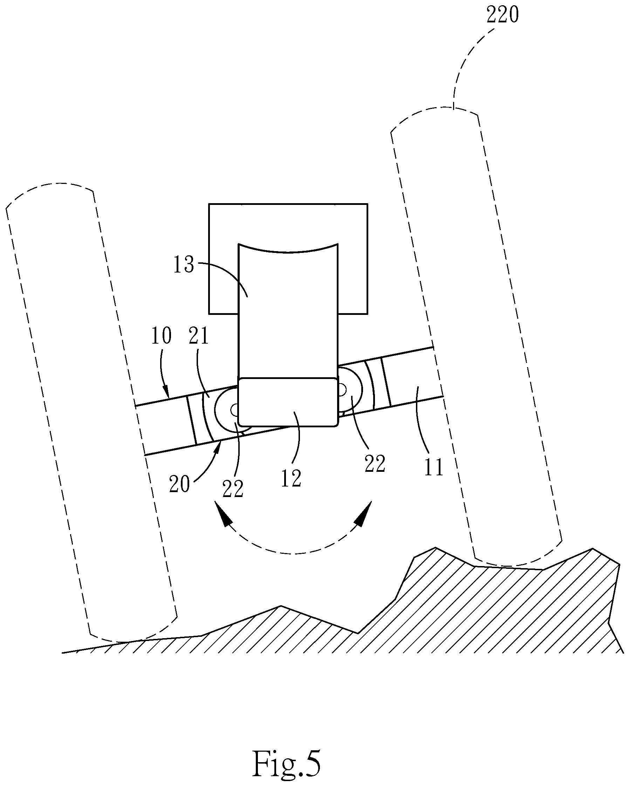

More specifically, the frame 10 includes a wheel axle 11 connected to the two sets of wheels 220, a first extension section 12 pivotally connected to the wheel axle 11 and extending towards a direction parallel with the ground, a second extension section 13 pivotally connected to the first extension section 12, and a bushing 14 bridging the second extension section 13 and the steering axis 210. The first extension section 12 and the second extension section 13 may be pivotally and rotatably connected, and a gripper pattern is formed at a side opposite a pivotal joint of the first extension section 12 and the second extension section 13. Referring to Fig. 4 and Fig. 5, the anti-tilt assembly 20 includes two clamping members 21 connected to the wheel axle 11 and extending along the same direction as the first extension section 12, and two dampers 22 respectively clamped by the clamping members 21 and located closely to two sides of the first extension section 12. When the wheel axle 11 receives a torque and becomes non-parallel to the ground, i.e., when the wheels 220 at the two sides of the wheel axle 11 become tilted due to an unleveled ground, each of the dampers 22 produces a reverse torque on the first extension section 12 to counteract the force by which the wheel axle 11 tilts relative to the ground, thereby achieving the object of stabilizing the electric carrier. In an embodiment of the present invention, the dampers 22 are made of polyurethane, and are preferably in a shape of a semi-circular cylinder, a sector cylinder, or a semi-circular cylinder or a sector cylinder provided with a notch at the center. The dampers 22 are in form of claws that push tightly against two sides of the first extension section 12, respectively, and produce friction with the first extension section 12 when the wheel axle 11 is tilted to provide an anti-tilting force.

Further, an axis line of the steering axis 210 corresponds to a middle part of the wheel axle 11. In this embodiment, an included angle between the steering axis 210 and the wheel axle 11 is between 75° and 88°. Thus, the length at a front end of the vehicle body of the electric carrier is shortened to allow the electric carrier to be more compact and ready to use, and the volume of the shock-absorbent anti-tilt structure 100 may also be reduced.

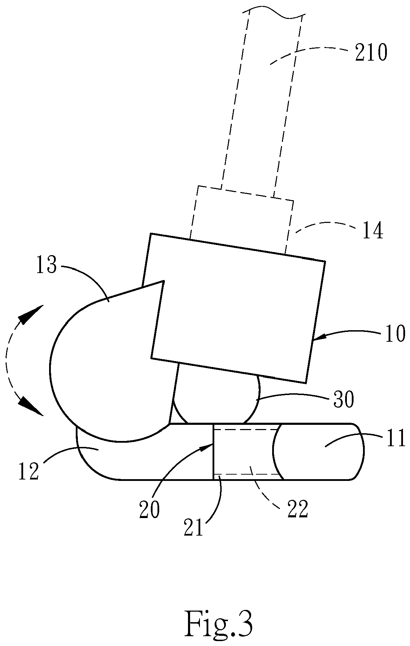

Referring to Fig. 3, in this embodiment, a shock absorber 30 is provided between the steering axis 210 and the wheel axle 11 and corresponding to the gripper pattern formed by the first extension section 12 and the second extension section 13. When the second extension section 13 receives a force and moves towards the wheel axle 11, the shock absorber 30 is compressed to produce a counteracting elastic force on the second extension section 13, hence achieving the object of shock absorbing. In this embodiment, the shock absorber 30 may be an elastic body made of polyurethane.

In conclusion, in the present invention, an elastic body (e.g., polyurethane) is adopted to replace the conventional technology of a mercury switch and motor-type adjustment. Thus, not only the overall weight and cost of the anti-tilt structure are reduced, but also the elastic dampers 22 are not restrained by the sensitivity of a conventional stepping motor.

## Claims

1. A shock-absorbent anti-tilt structure (100) of an electric carrier, configured for coordinating with a steering system (200), which comprises a steering axis (210) and two sets of wheels (220) linked with the steering axis (210),
said shock-absorbent anti-tilt structure (100) comprising:
a frame (10), comprising a wheel axle (11), a first extension section (12) being pivotally connected to the wheel axle (11) and extending towards a direction in parallel with the ground, a second extension section (13) being pivotally connected to the first extension section (12), and a bushing (14) bridging the second extension section (13) and the steering axis (210), wherein a gripper pattern is formed at a side opposite a pivotal joint of the first extension section (12) and the second extension section (13); and
an anti-tilt assembly (20), comprising two clamping members (21) connected to the wheel axle (11) and extending along a same direction as the first extension section (12), and two dampers (22) respectively clamped by the clamping members (21) and located closely against two sides of the first extension section (12), wherein each of the dampers (22) produces a reverse torque on the first extension section (12) when the wheel axle (11) receives a torque and becomes unleveled with the ground.

2. The shock-absorbent anti-tilt structure (100) of claim 1, wherein an axis line of the steering axis (210) corresponds to a middle part of the wheel axle (11).

3. The shock-absorbent anti-tilt structure (100) of claim 1 or 2, further comprising a shock absorber (30) provided between the steering axis (210) and the wheel axle (11) and corresponding to the gripper pattern formed by the first extension section (12) and the second extension section (13), wherein the shock absorber (30) produces a counteracting force on the second extension section (13) when the second extension section (13) receives a force and moves towards the wheel axle (11).

4. The shock-absorbent anti-tilt structure (100) of any of the preceding claims, wherein the shock absorber (30) is made of polyurethane.

5. The shock-absorbent anti-tilt structure (100) of any of the preceding claims, wherein an included angle between the steering axis (210) and the wheel axle (11) is between 75° and 88°

6. The shock-absorbent anti-tilt structure (100) of an electric carrier of any of the preceding claims, wherein the dampers (22) are made of polyurethane, and respectively presses tightly against two sides of the first extension section (12).
